# EUROPEAN PATENT APPLICATION

(11) **EP 2 431 254 A2**
(43) Date of publication of application: **21.03.2012**
(21) Application number: 11181799.5
(22) Date of filing: 19.09.2011
(51) Int. Cl.: B62B 7/08, B62B 7/06

(54) **Folding stroller frame**

(30) Priority: 19.09.2010 CN 201020535050 U
(71) Applicant: Lerado (Zhong Shan) Industrial Co., Ltd., Guang Dong Province (CN)
(72) Inventor: Hung, Sheng-Po, 600 Chuayi City (TW)
(74) Representative: TER MEER - STEINMEISTER & PARTNER GbR

(57) **Abstract**

A folding stroller frame (10) comprises at least a left-retractable framework (11), a right-retractable framework (12), a first interconnecting retractable framework (5) and second interconnecting retractable framework (6) controllably connected between the left-retractable framework (11) and the right-retractable framework (12). Each of the left-retractable framework (11) and the right-retractable framework (12) comprises a push control rod (3), a front strut (1), a rear strut (2), a pivot-and-slide connector (7) and a second linking member (82). The push control rod (3) has a guiding groove (32); the front strut (1) is lockable with the lower distal end of the push control rod (3); and the rear strut (2) pivots with the front strut (1) by a joint (13). The pivot-and-slide connector (7) pivots to the joint (13) and slidable along the guiding groove (32); and the second linking member (82) interconnects between the push control rod (3) and the front strut (1). When the lower distal end of the push control rod (3) is unlocked and departed from the front strut (1), the second linking rod (82) rotating and leading the push control rod (3) to move downward and overlap with the front strut (1) in a shortened fashion.

## Description

### FIELD OF THE INVENTION

The invention relates to a folding stroller frame, and more particularly, to a stroller frame comprising a rotatable linking member and a joint slidable along a push control rod for leading the push control rod to move downward and overlap with the front strut thereof in a shortened fashion, when the stroller frame is folded in a compact configuration.

### DESCRIPTION OF THE RELATED ART

Traditional umbrella style of the foldable stroller frame is capable of folding in longitudinal and transverse directions; however, the total length of the folded stroller frame cannot be shorten any more in third direction while being folded, unless the push control bars thereof are made of retractable tubes.

### SUMMARY OF THE INVENTION

An object of the present invention is to provide a folding stroller frame that can shorten the total length thereof in folding operation automatically. The folding stroller frame comprises at least a left-retractable framework, a right-retractable framework, a first interconnecting retractable framework and second interconnecting retractable framework both controllably connected between the left-retractable framework and the right-retractable framework. Each of the left-retractable framework and the right-retractable framework comprises a push control rod, a front strut, a rear strut, a pivot-and-slide connector and a second linking member. The push control rod thereof has a guiding groove, in the meantime the front strut is lockable with the lower distal end of the push control rod; and the rear strut is pivoted with the front strut by a joint. The pivot-and-slide connector pivots to the joint and slidable along the guiding groove. The second linking member interconnects between the push control rod and the front strut. When the lower distal end of the push control rod is unlocked and departed from the front strut, the second linking rod is rotating and leading the push control rod to move downward and overlap with the front strut again in a shortened fashion.

### BRIEF DESCRIPTION OF THE DRAWINGS

The accomplishment of this and other objectives and the range of suitability of the application of the invention will become apparent from the following description and its accompanying drawings of which:

FIG. 1 is a schematic perspective view illustrating a folding stroller frame according to the present invention erected in a use position;

FIG. 2 is a partial enlarged and exploded perspective view illustrating a pivot-and-slide connector which is used to pivot to a joint, a push control rod formed with a guiding groove adopted for guiding the pivot-and-slide connector to slide along the push control rod;

FIG. 3 is a side view illustrating the folding stroller frame according to the present invention erected in a use position;

FIG. 4 is a partial enlarged view illustrating the pivot-and-slide connector being pivoted with the joint, and confined within and guided by the guiding groove for sliding along the push control rod;

FIG. 5 is a side view illustrating the operation of folding the stroller frame, in which the push control rod is moving downward;

FIG. 6 is a partial enlarged view illustrating push control rod capable of sliding downward relative to the front strut while folding the folding stroller frame to a compact configuration;

FIG. 7 is a schematic perspective view illustrating the folding stroller frame folded in a shortened and compact configuration.

### DETAILED DESCRIPTION OF THE PREFERRED EMBODIMENT

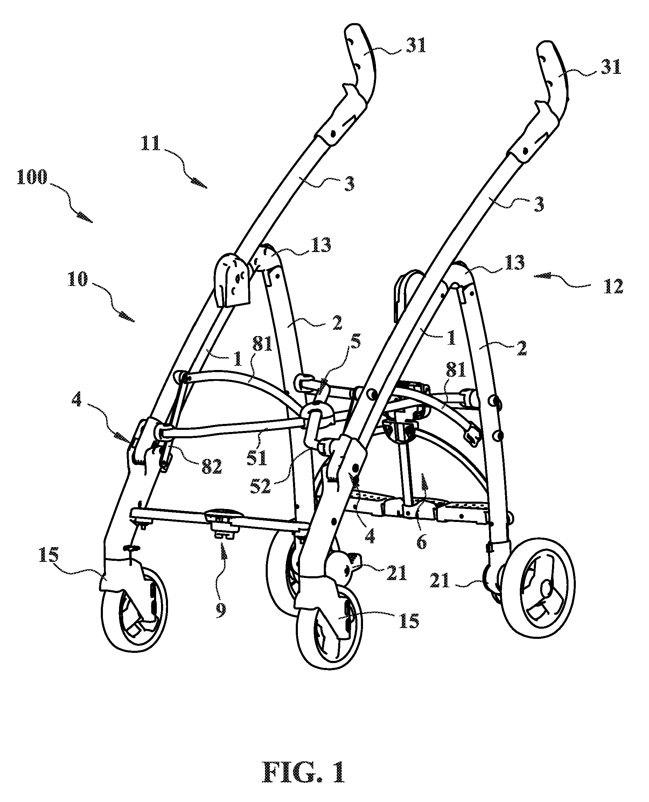

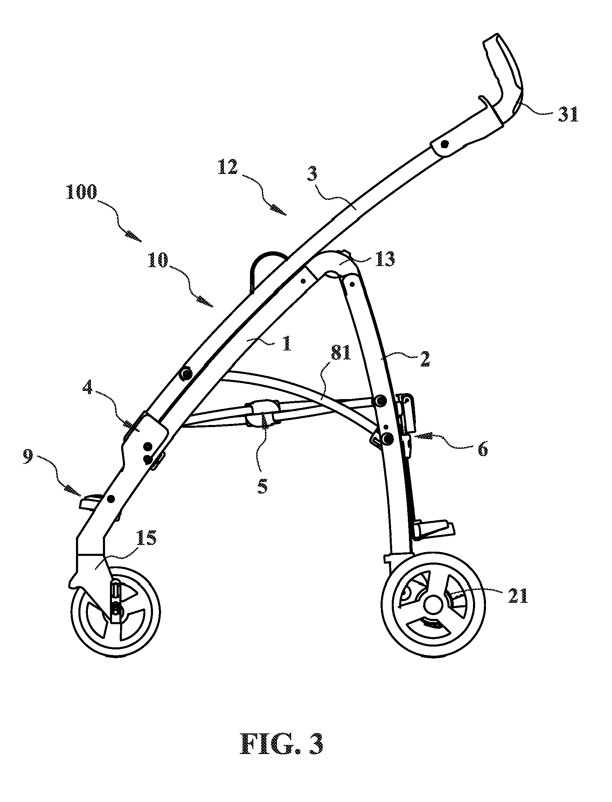

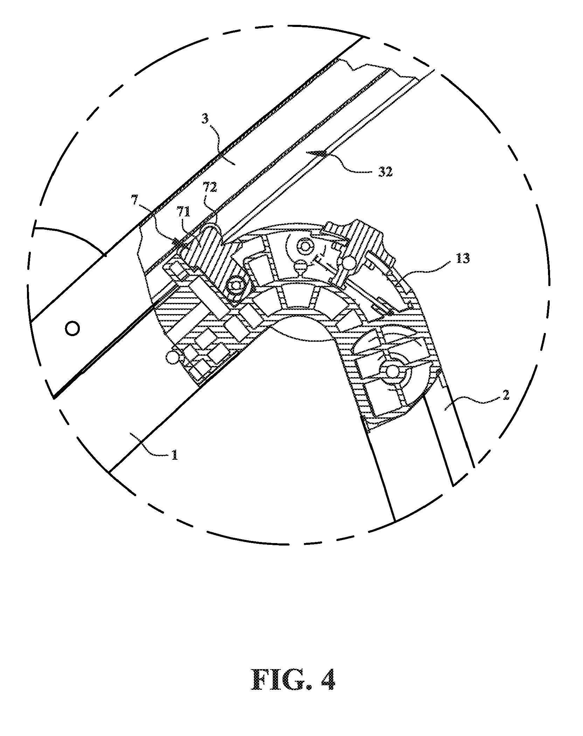

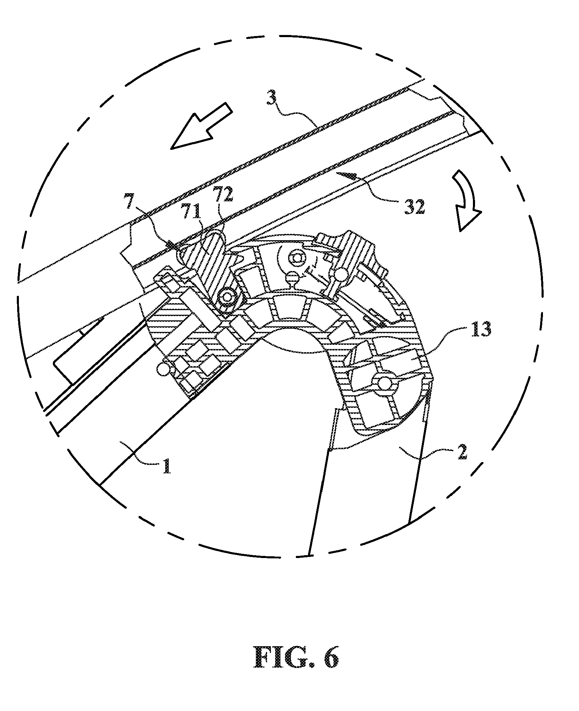

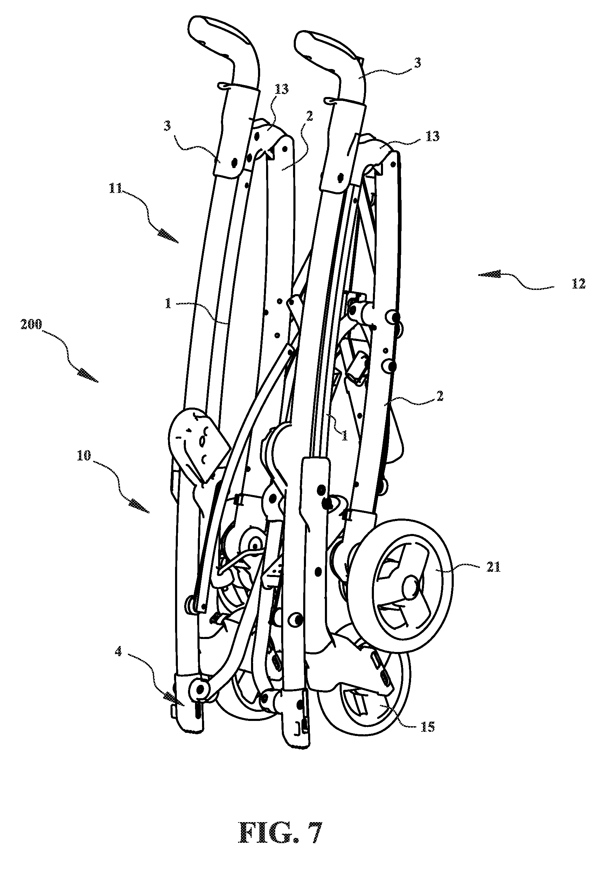

Referring to FIGS. 1 to 6, a preferred embodiment of a folding stroller frame (10) of the present invention is presented, which comprises a left-retractable framework (11), a right-retractable framework (12), a first interconnecting retractable framework (5) and second both interconnecting retractable framework (6) both controllably connected between the left-retractable framework (11) and the right-retractable framework (12). The folding stroller frame (10) is capable of erecting in a use position (100), and folding in a folded position 200 as shown in FIG. 7.

Each of the left-retractable framework (11) and the right-retractable framework (12) comprises a push control rod (3), a front strut (1), a rear strut (2), a pivot-and-slide connector (7) and a second linking member (82).

The push control rod (3) is formed with a guiding groove (32), and has a lower distal end, an upper end and a grip (31). The grip (31) mounted on the upper end for holding by a user of stroller. The lower distal end of the push control rod (3) is releasably lockable to the front strut (1) when the folding stroller frame (10) kept in the use position (100). For instance, a locking mechanism (4) may be adopted and controllably mounted at the lower distal end of the push control rod (3) thereby releasably locking the lower distal end of the push control rod (3) to the front strut (1).

The rear strut (2) and the front strut (1) pivots to each other by a joint (13) that permits the rear strut (2) to rotate relative to the front strut (1). A number of front wheels (15) and rear wheels (21) are equipped at the lower distal end of the front strut (1) and the rear strut (2).

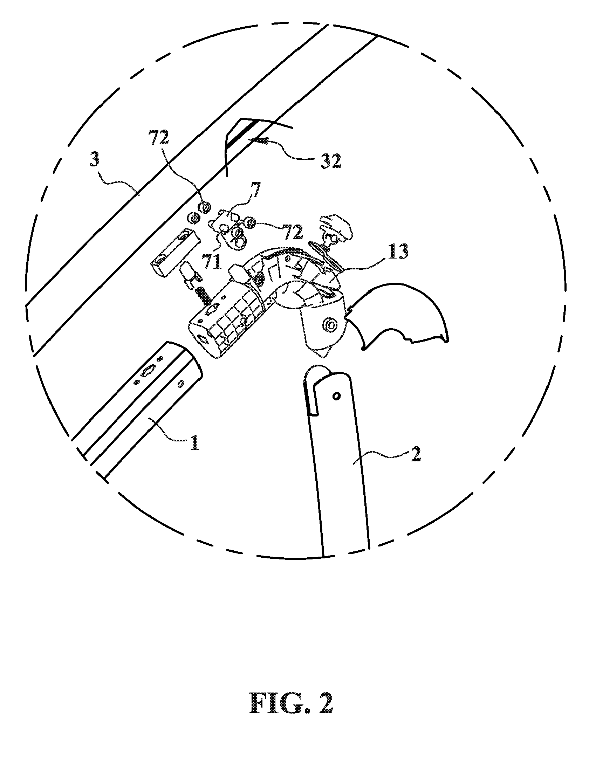

The pivot-and-slide connector (7) is pivoted to the joint (13) and slidable along the guiding groove (32) of the push control rod (3), this would permit the push control rod (3) be rotatably sliding relative to the upper end of the front strut (1). Referring to FIGS. 2, 4 and 6, the slider (71) maybe equipped with a plurality of rollers (72) for contacting the guiding groove (32) with less resistance.

Beside that, the second linking member (82) pivotally connects between the push control rod (3) and the front strut (1). When the lower distal end of the push control rod (3) is unlocked and departed from the front strut (1), the second linking rod (82) is rotating and leading the push control rod (3) to move downward and overlap again with the front strut (1) in a shortened fashion.

The first interconnecting retractable framework (5) comprising a first member (51) and a second member (52) pivoted to each other formed an X-linked framework. The first interconnecting retractable framework (5) has at least two pairs of distal end for pivotally connecting between the lower end of the push control rod (3) and the rear struts (2) respectively.

The second interconnecting retractable framework (6) connects between the rear struts (2) of the left-retractable framework (11) and the right-retractable framework (12). The second interconnecting retractable framework (6) is releasably lockable in an erected position when the folding stroller frame (10) is locked in the erected use position (100) as shown in FIG.1. When the second interconnecting retractable framework (6) is unlocked, would become foldable to allow the left-retractable framework (11) and the right-retractable framework (12) to close to each other when the folding stroller frame (10) is in the folded position (200) as shown in FIG. 7.

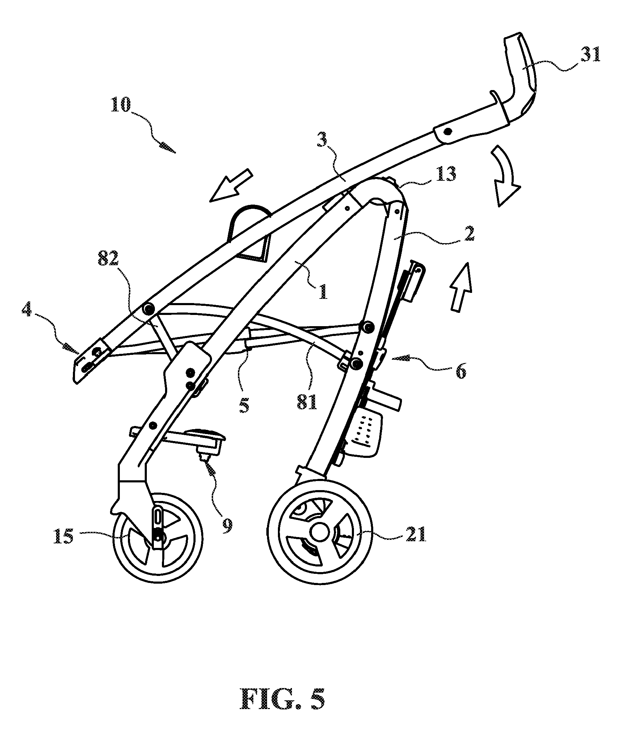

Referring to FIG. 5, there is a first linking member (81) maybe adopted to associate the push control rod (3) and the rear struts (2). When the lower distal end of the push control rod (3) is unlocked and departed from the front strut (1), the moving downward push control rod (3) would drive the rear struts (2) through the first linking member (81) to close to the front strut (1).

For furnishing a better form to such a stroller, a foldable footrest (9) maybe adopted to connect between the front struts (1) of the left-retractable framework (11) and the right-retractable framework (12), that can follow the folding stroller frame (10) to erect in a use position and be folded in a compact configuration as shown in FIGS. 5 and 7.

It will become apparent to those people skilled in the art that various modifications and variations can made to the mechanism of the invention without departing from the scope or spirit of the invention. In view of the foregoing description, it is intended that all the modifications and variation fall within the scope of the following appended claims and their equivalents.

## Claims

1. A folding stroller frame (10), comprises at least a left-retractable framework (11), a right-retractable framework (12), a first interconnecting retractable framework (5) and second interconnecting retractable framework (6) controllably connected between the left-retractable framework (11) and the right-retractable framework (12); wherein the left-retractable framework (11) and the right-retractable framework (12) each comprising:
a push control rod (3), formed with a guiding groove (32);
a front strut (1), lockable with a lower distal end of the push control rod (3) a rear strut (2), pivot with the front strut (1) by a joint (13);
a pivot-and-slide connector (7) pivot to the joint (13) and slidable along the guiding groove (32); and
a second linking member (82), connected between the push control rod (3) and the front strut (1); and
while the lower distal end of the push control rod (3) is unlocked and departed from the front strut (1), the second linking rod (82) rotating and leading the push control rod (3) to move downward and overlap with the front strut (1) in a shortened fashion.

2. The folding stroller frame as claimed in claim 1, wherein the first interconnecting retractable framework (5) connects between the push control rod (3) and the rear strut (2).

3. The folding stroller frame as claimed in claim 1, wherein the second interconnecting retractable framework (6) connects between the rear struts (2) of the left-retractable framework (11) and the right-retractable framework (12).

4. The folding stroller frame as claimed in claim 1, wherein a first linking member (81) is associated between the push control rod (3) and the rear struts (2).

5. The folding stroller frame as claimed in claim 4, when the lower distal end of the push control rod (3) is unlocked and departed from the front strut (1), the rear struts (2) is driven by the push control rod (3) to rotate to close to the front struts (1).

6. The folding stroller frame as claimed in claim 1, wherein the distal end of the push control rod (3) is releasably lock to the front strut (1) by a locking mechanism (4).

7. The folding stroller frame as claimed in claim 1, wherein a foldable footrest (9) connects between the front struts (1) of the left-retractable framework (11) and the right-retractable framework (12).

8. The folding stroller frame as claimed in claim 1, wherein the pivot-and-slide connector (7) includes a slider (71) guided and movable along the guiding groove (32) of the push control rod (3).

9. The folding stroller frame as claimed in claim 1, wherein the slider (71) contacts the guiding groove (32) with a plurality of rollers (72).

10. The folding stroller frame as claimed in claim 1, wherein the second interconnecting retractable framework (6) is lockable in a erected position for keeping the folding stroller frame in a use position (100).
